# EUROPEAN PATENT SPECIFICATION

(11) **EP 0 868 640 B1**
(45) Date of publication and mention of the grant of the patent: **16.10.2002**
(21) Application number: 96931422.8
(22) Date of filing: 27.08.1996
(51) Int. Cl.: B04C 5/081, B04C 5/14, B04C 5/187, B01J 8/00, C10G 11/18

(54) **A FLUIDIZED CATALYTIC CRACKING APPARATUS WITH CONTAINED VORTEX THIRD STAGE SEPARATOR**
FLUIDKATALYTISCHE SPALTUNGSVORRICHTUNG MIT DREISTUFIGEM VORTEXSEPERATOR
APPAREIL DE CRAQUAGE CATALYTIQUE A LIT FLUIDISE, AVEC SEPARATEUR DE TROISIEME PHASE A TOURBILLON CONFINE

(30) Priority: 26.09.1995 US 533135
(43) Date of publication of application: 07.10.1998
(73) Proprietor: EXXONMOBIL OIL CORPORATION, Fairfax, VA 22037 (US)
(72) Inventor: RATERMAN, Michael, Francis, Doylestown, PA 18901-9615 (US); SMALLEY, Christopher, Gorden, Chesterfield, NJ 08562 (US)
(74) Representative: Lawrence, Peter Robin Broughton
(86) International application number: PCT/US96/13792
(87) International publication number: WO 97/012187

(56) References cited:
- DE-C- 672 485
- US-A- 2 681 124
- US-A- 2 804 171
- US-A- 2 986 278
- US-A- 3 907 671
- US-A- 4 005 998
- US-A- 5 122 171
- US-A- 5 178 648
- US-A- 5 221 301

## Description

This invention relates to cyclones for separating finely divided solid particulates from gas stream, particularly in the third stage separators of fluidized catalytic cracking units. The invention of this application is is related to the separator shown in International Application No. WO 95/30119 and in US 5,538,696 and US-A- 3907671 which relates to the preamble of claim 1.

Catalytic cracking is widely used to convert heavy feed into lighter products by catalytically cracking large molecules into smaller molecules. In fluidized catalytic cracking (FCC) catalyst circulates between a cracking reactor and a catalyst regenerator. In the reactor, hydrocarbon feed contacts a source of hot, regenerated catalyst which vaporizes and cracks the feed at high temperatures. The cracking reaction deposits carbonaceous hydrocarbons or coke on the catalyst, thereby deactivating the catalyst. The cracked products are separated from the coked catalyst which is then stripped of volatiles, usually with steam, in a catalyst stripper and the stripped catalyst is then regenerated. The catalyst regenerator burns coke from the catalyst with oxygen containing gas, usually air. Decoking restores catalyst activity and simultaneously heats the catalyst to the temperatures required for cracking. This heated catalyst is recycled to the cracking reactor to crack more fresh feed. Flue gas formed by burning coke in the regenerator may be treated for removal of particulates and for conversion of carbon monoxide, after which the flue gas is normally discharged into the atmosphere.

Catalyst and fines must be removed from flue gas discharged from the regenerator. Any catalyst not recovered by the regenerator cyclones stays with the flue gas, unless an electrostatic precipitator, bag house, or some sort of removal stage is added at considerable cost. The amount of fines in most FCC flue gas streams exiting the regenerator is enough to cause severe erosion of turbine blades if a power recovery system is installed to try to recover some of the energy in the regenerator flue gas stream.

The solids remaining at this point are difficult to recover, having successfully passed through several stages of highly efficient cyclones. The solids are small, essentially all are below 20 microns, and include significant amounts of submicron to under 5 micron sized material.

Collection of such solids has been a challenge for almost a century. A survey of the state of the art is described in Perry's Chemical Engineering Handbook, in DUST-COLLECTION EQUIPMENT, discussed in the parent application. FCC operators typically use cyclones to separate solids from gas.

Refiners typically use 2 to 8 primary and 2 to 8 secondary cyclones in their FCC regenerators, because of mechanical constraints and pressure drop concerns. These cyclones have a fairly large diameter, which restricts the amount of centrifugal acceleration which can be achieved.

Thus FCC regenerators inherently let a large amount of fines and dust, in the sub-15 micron range, pass out with the flue gas. This material must be removed from the flue gas prior to discharge to the atmosphere, or passage through a power recovery turbine.

Generally a third stage separator is installed upstream of the turbine to reduce the catalyst loading and protect the turbine blades, or permit discharge of flue gas to the air. These can be 20, 50, 100 or even more small diameter cyclones. The third stage separator can use large numbers of small cyclones because it is not in or a part of the FCC regenerator. Small diameter cyclones are used because these give better fines collection than larger cyclones, for the same gas velocity and pressure drop. Perry's Chemical Engineer's Handbook, Sixth Edition, in Table 20-33 reports that for a 5 - 20 micron dust mixture, dust collection improves significantly as cyclone diameter decreased, with efficiencies for 6, 9 and 24 inch cyclones being 90 %, 83 % and 70 % respectively.

Several vendors supply systems with many small diameter, horizontally mounted, closely connected and radially distributed cyclones about a central gas outlet. The use of multiple, small, horizontally mounted cyclones is also known for general dust removal, see e.g., the collector assemble shown in Fig. 20-108 of Perry's Chemical Engineering Handbook, Sixth Edition. Gas is tangentially added to a great number of generally horizontally mounted cyclones. Purified gas is withdrawn via a central gas outlet near the tangential inlet, while dust is removed from the opposite end of the cyclone, which may be of reduced diameter but is unsealed.

International Application WO 95/30119 provided a way for improving the operation of horizontal cyclones. There, the problem was that dust from the upper horizontal cyclones falling past a lower horizontal cyclones became entrained in the vortex associated with the lower cyclones. Adding a "scroll" or "half-pipe" addition to the cyclone barrel improved solids recovery. The vortex associated with the cyclone was either enclosed (scroll) or protected somewhat (half-pipe extension).

While the improvements achieved in WO 95/30119 are significant, they did not address the different problems associated with third stage separators using large numbers of vertical cyclones. Recovery efficiency in these units was also not as high as desired.

With vertical third stage separators, the problem is that the cyclone vortex extends out the bottom of the cyclones into the collection chamber that this vortex is able to capture particles from the collection chamber. In known types of TSS units using vertical cyclones the unstable vortex, and/or gas currents associated with it, tend to collect or interact with some of the falling dust and re-introduce the dust into the cyclone, causing it to be discharged with the clean gas in the form of increased emissions. In our process we put a shield around the vortex to shield particles in the catch chamber from vortex. By adding a shield or vortex containment cylinder to the cyclone, it is possible to improve the efficicency of the cyclone.

The present invention provides a vertical cyclone separator comprising: a cylindrical cyclone body having longitudinal axis disposed vertically or within 30 ° of vertical. The cyclone body has a gas inlet for a gas stream and entrained solids and a cylindrical gas outlet tube at one end. The gas outlet tube which has its longitudinal axis aligned with the longitudinal axis of the cylindrical cyclone body, has an inlet extending into the cylindrical cyclone body. At the opposite end, the cyclone body has a vortex outlet for gas and entrained solids; this vortex outlet has a circular opening in axial alignment with the gas outlet tube, and normally a diameter no greater than the diameter of the cylindrical cyclone body. A vortex-containment cylinder, which usually has an inlet diameter no greater than the diameter of the cyclone body is disposed with its longitudinal axis axially aligned with the axis of the cyclone body. This vortex containment cylinder has an open end connected to the vortex outlet of the cyclone body to admit the vortex of gas and entrained solids into the containment cylinder. It also has a closed end located at the opposite end with a solids and gas outlet port at the closed end, usually in portion of a sidewall of the cylinder in the form of a slot parallel to the axis of the cylinder.

The cyclone is particularly useful as the third stage Separator (TSS) of a fluid catalytic cracking unit.

### The drawings

Figure 1 is a sectional view of a vertical cyclone for use in a third stage separator with a vortex containment cylinder.

Figure 2 is a sectional view of another form of vertical cyclone for use in a third stage separator with a vortex containment cyclinder.

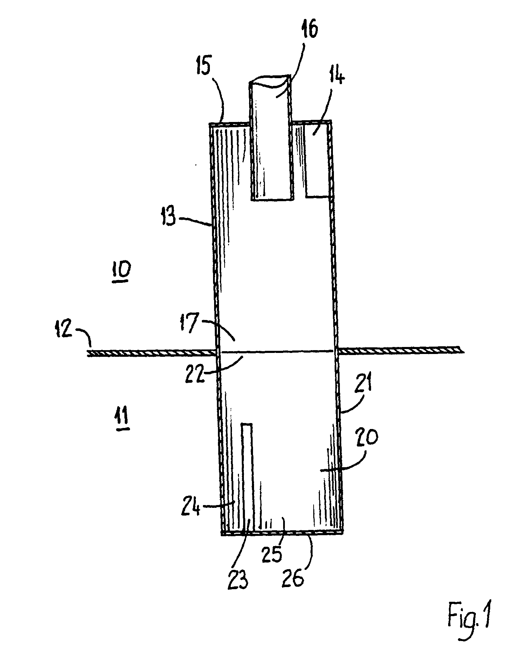

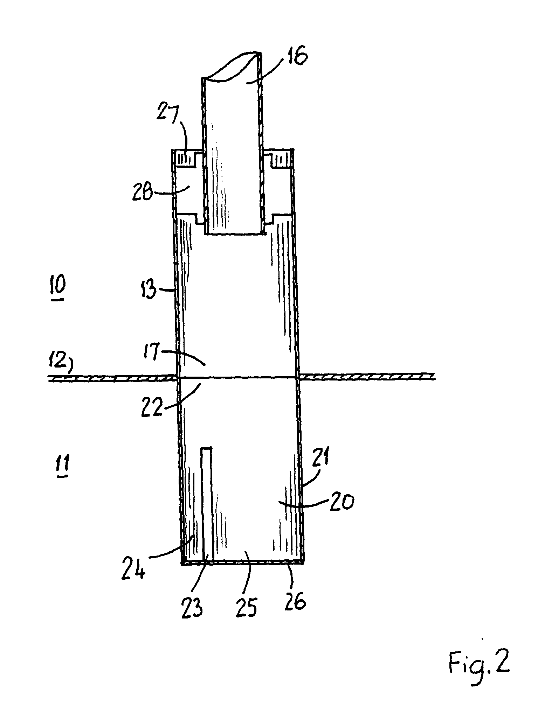

The present invention can used in a third stage separator of the kind shown in Figure 2 of International application WO 95/30119 which uses vertical cyclones and is similar to the separator shown in Fig. 1 of Improved hot-gas expanders for cat cracker flue gas, Hydrocarbon Processing, March 1976, p. 141. The cyclones with which the present vortex containment device is used need not, however, be completely vertical but may vary up to about 30E from the vertical.

Figure 1 shows a schematic view of one vertical cyclone in a third stage separator such as the one referred to above. The gas distributing chamber or plenum 10 is separated from the dust collection (or catch) chamber 11 by plate 12 with cyclone 13 being fixed to plate 12 in the conventional manner. The dust laden gas enters cyclone 13 through tangential inlet 14. Clean gas is removed through gas outlet tube 16 located in cyclone top plate 15. Catch chamber 11 is full of dust particles, discharged from the cyclones (other cyclones not shown).

The unstable vortex formed within cyclone 13 is contained, and effectively isolated from the dust catch chamber by vortex containment cylinder 20 which is attached to plate 12 on the opposite side to cyclone 13. Containment cylinder 20 has its axis aligned with that of cyclone 13 and normally the diameter of containment cylinder 20 does not exceed that of cyclone 13. Containment cylinder 20 has a tubular barrel 21 with its open end 22 connecting to the vortex outlet 17 at the lower open end of cyclone 13. The dust-laden gas which is discharged from the interior of cyclone 13 through its lower open end enters the containment cylinder which isolates it from the gas in the catch chamber 11. Dust laden gas leaves containment cylinder 20 through a vertically oriented, rectangular slot 23 in the side wall 24 of cyclinder 20 at its lower end 25 which is closed by end plate 26. Containment of the vortex in cylinder 20 prevents entrainment of the dust in the catch chamber and re-introduction into cyclone 13. The collected particles in the catch chamber fall down for eventual removal.

Figure 2 shows a similar cyclone with vortex containment cylinder connected to the vortex outlet, with like parts given like reference numerals. In this csse, however, the cyclone has an annular axial inlet 27 which extends concentrically around gas outlet tube 16, the gases passing into the cyclone between barrel 13 of the cyclone and gas outlet tube 16. Swirl vanes 28 impart a rotating motion to the incoming gases to promote the cyclonic separation within the cyclone and also locate the outlet tube 16 coaxially within the body of the cyclone.

The present cyclones with their associated vortex containment cylinders are preferably used as a third stage separator removing catalyst and fines from FCC regenerator flue gas. The conventional parts of the device are available commercially. The process and apparatus of the present invention is primarily directed at the small diameter vertical cyclones used in such TSS units.

The primary modification to the small cyclones is closing that portion of the barrel which extends into the catch chamber. There must still be a way provided for particles to exit the cyclone, and this is achieved by use of one or more ports or openings in the sidewall of the barrel of the containment cylinder.

A good particulates exit is a simple rectangular slot cut in the sidewall of the device, although openings may also be punched or drilled. The slot or other port should be sized large enough to handle anticipated solids flow, and will typically be from 10 to 200 % or more of the cross sectional area of the outlet tube 16. The slot is preferably beveled (in the manner shown in Figure 5 of WO 95/30119) so that fluid flow from the interior of the device through the slot is tangential.

The slot may also be simply punched or drilled, or have a slightly raised lip to divert circulating solids from the interior of the solids outlet through the slot.

While the slot outlet is preferably the sole solids outlet the device will work with two or more outlets, such as holes or openings in the normally closed end 26 of the containment cylinder.

### Cyclone dimernsions

Much of the cyclone design is conventional, such as sizing of the inlet, setting ratios of internal diameter of the outlet tube to other dimensions, etc. Further details, and naming conventions, may be found in Perry's Chemical Engineers' Handbook, 6th Edition, Robert H. Perry and Don Green. The nomenclature discussion in Gas-Solids Separations, from 20-75 to 20-77, Fig 20-106, 20-107 and 20-108 is referred to here. The design approach used for the vertical cyclones can be essentially the same as that used to size the horizontal cyclones disclosed in WO 95/30119. Normally, the diameter of the vortex containment cylinder is 100 to 150 % of the diameter of the primary cyclone body at the gas/solids inlet end but it may be smaller if the cyclone has a conical portion at its lower end providing a vortex outlet of reduced diameter. The vortex containment body normally has a length at least equal to the length of the gas outlet tube within the primary cyclone body.

The new cyclone design is easy to fabricate using conventional techniques. The device significantly improves removal of fine dust, that is, 0 - 5 micron particles. The design reduces erosion of power recovery turbine blades, and also reduces particulates emissions. The device may be easily retrofit to commercial installations of small diameter, vertically mounted multi-cyclone units to enhance efficiency significantly. The capital expense involved is minimal, and there are almost no operating expenses associated with such a retrofit. There will be little increase in pressure drop getting through the cyclones, most of the energy consumed in such cyclones is used in accelerating the gas to form a high energy vortex.

The scroll solids outlet of the invention may even permit a significant reduction in pressure drop, because the improved efficiency of cyclone separation should permit use of less vigorous vortex formation and consequently, require less pressure drop to get through the cyclones.

## Claims

1. A vertical cyclone separator comprising:
(i) a cylindrical cyclone body (13) having its longitudinal axis disposed vertically or within 30° of vertical,
(i) a gas inlet (14) at the first end of the cyclone body (13) for a gas stream and entrained solids,
(ii) a cylindrical gas outlet tube (16) at the first end of the cyclone body (13), which outlet tube (16) has its longitudinal axis aligned with the longitudinal axis of the cylindrical cyclone body (13) and an inlet extending into the cylindrical cyclone body (13),
(iii) a vortex outlet opening (17) in axial alignment with the gas outlet tube (16) at the other end of the cyclone body (13) for outlet of a vortex of gas and entrained solids,
(iv) a vortex-containment cylinder (20) disposed with its longitudinal axis axially aligned with the axis of the cyclone body (13),
**characterised in that** the vortex containment cylinder (20) has
(v) an open end (22) connected to the vortex outlet opening (17) of the cyclone body (13) to admit the vortex of gas and entrained solids into the containment cylinder, the internal diameter of the vortex containment cylinder (20) at said open end (22) being no greater than the diameter of the vortex outlet opening (17),
(vi) a closed end (26) at the opposite end (25),
(vii) a solids outlet port in the form of a slot (23) in the sidewall of the vortex containment cylinder (20) adjacent said closed end (26) with the major axis of the slot being parallel to the axis of the vortex containment cylinder (20).

2. A cyclone separator according to claim 1 in which slot (22) has a length at least 50% of the length of the vortex containment cylinder (20).

3. A cyclone separator according to claim 2 in which the slot (23) has a length equal to the length of the vortex containment cylinder (20).

4. A cyclone separator according to any of claims 1 to 3 in which the slot (23) has beveled edges for tangential removal of solids and gas from the vortex containment cylinder (20).

5. A cyclone separator according to any of claims 1 to 4 in which the gas inlet (14) is located tangentially with respect to the cyclone body (13).

6. A cyclone separator according to any of claims 1 to 5 in which the gas inlet (14) is located axially with respect to the cyclone body (13).

7. A cyclone separator according to any of claims 1 to 6 in which the cyclone body (13) has a truncated conical section which connects the upper portion of the cyclone body (13) to a vortex outlet (17) of reduced diameter with respect to the diameter of the cyclone at the inlet end.

## Patentansprüche

1. Vertikaler Fliehkraftabscheider, der umfaßt:
(i) einen zylindrischen Zyklonkörper (13), dessen Längsachse vertikal oder in einem Bereich von 30° zur Vertikalen angeordnet ist,
(i) einen Gaseinlaß (14) am ersten Ende des Zyklonkörpers (13) für einen Gasstrom und mitgerissene Festkörper,
(ii) ein zylindrisches Gasauslaßrohr (16) am ersten Ende des Zyklonkörpers (13), wobei die Längsachse des Auslaßrohrs (16) auf die Längsachse des zylindrischen Zyklonkörpers (13) ausgerichtet ist und der Einlaß sich in den zylindrischen Zyklonkörper (13) erstreckt,
(iii) eine Wirbelauslaßöffnung (17), die auf das Gasauslaßrohr (16) am anderen Ende des Zyklonkörpers (13) axial ausgerichtet ist, um einen Wirbel aus Gas und mitgerissenen Festkörpern auszulassen,
(iv) einen Wirbeleinschlußzylinder (20), dessen Längsachse auf die Achse des Zyklonkörpers (13) axial ausgerichtet ist,
**dadurch gekennzeichnet, daß** der Wirbeleinschlußzylinder (20) umfaßt:
(v) ein offenes Ende (22), das mit der Wirbelauslaßöffhung (17) des Zyklonkörpers (13) verbunden ist, um den Wirbel aus Gas und mitgerissenen Festkörpern in den Einschlußzylinder einzulassen, wobei der Innendurchmesser des Wirbeleinschlußzylinders (20) am offenen Ende nicht größer als der Durchmesser der Wirbelauslaßöffnung (17) ist,
(vi) ein geschlossenes Ende (26) am gegenüberliegenden Ende (25),
(vii) einen Festkörperauslaßanschluß in Form eines Schlitzes (23) in der Seitenwand des Wirbeleinschlußzylinders (20) in der Nähe des geschlossenen Endes (26), wobei die Hauptachse des Schlitzes zur Achse des Wirbeleinschlußzylinders (20) parallel ist.

2. Fliehkraftabscheider nach Anspruch 1, bei dem der Schlitz (22) eine Länge besitzt, die wenigstens 50 % der Länge des Wirbeleinschlußzylinders (20) beträgt.

3. Fliehkraftabscheider nach Anspruch 2, bei dem der Schlitz (23) eine Länge hat, die gleich der Länge des Wirbeleinschlußzylinders (20) ist.

4. Fliehkraftabscheider nach einem der Ansprüche 1 bis 3, bei dem der Schlitz (23) angefaste Kanten für eine tangentiale Abführung der Festkörper und des Gases aus dem Wirbeleinschlußzylinders (20) besitzt.

5. Fliehkraftabscheider nach einem der Ansprüche 1 bis 4, bei dem der Gaseinlaß (14) in bezug auf den Zyklonkörper (13) tangential angeordnet ist.

6. Fliehkraftabscheider nach einem der Ansprüche 1 bis 5, bei dem der Gaseinlaß (14) in bezug auf den Zyklonkörper (13) axial angeordnet ist.

7. Fliehkraftabscheider nach einem der Ansprüche 1 bis 6, bei dem der Zyklonkörper (13) einen kegelstumpfförmigen Abschnitt besitzt, der den oberen Abschnitt des Zyklonkörpers (13) mit einem Wirbelauslaß (17) mit verringertem Durchmesser in bezug auf den Durchmesser des Zyklons am Einlaßende verbindet.

## Revendications

1. Un séparateur vertical à cyclone comprenant :
(i) un corps cylindrique de cyclone (13) dont l'axe longitudinal est disposé verticalement ou sous un angle de 30° par rapport à la verticale,
(i) une entrée de gaz (14) à la première extrémité du cyclone (13) pour un courant de gaz et de solides entraînés,
(ii) un tube cylindrique (16) de sortie de gaz à la première extrémité du corps de cyclone (13), lequel tube de sortie (16) a son axe longitudinal aligné sur l'axe longitudinal du corps de cyclone cylindrique (13) et une entrée s'étendant dans le corps cylindrique de cyclone (13),
(iii) une ouverture de sortie de vortex (17) dans l'alignement axial avec le tube (16) de sortie de gaz à l'autre extrémité du corps de cyclone (13) pour la sortie d'un vortex de gaz et de solides entraînés,
(iv) un cylindre (20) de confinement de vortex disposé avec son axe longitudinal aligné axialement sur l'axe du corps (13) de cyclone,
**caractérisé en ce que** le cylindre (20) de confinement de vortex comporte
(v) une extrémité ouverte (22) reliée à l'ouverture (17) de sortie de vortex du corps de cyclone (13) pour admettre le vortex de gaz et de solides entraînés dans le cylindre de confinement, le diamètre intérieur du cylindre (20) de confinement de vortex à ladite extrémité ouverte (22) n'étant pas plus grand que le diamètre de l'ouverture (17) de sortie de vortex,
(vi) une extrémité fermée (26) à l'extrémité opposée (25),
(vii) un orifice de sortie de solides sous la forme d'une fente (23) dans la paroi latérale du cylindre (20) de confinement de vortex adjacent à ladite extrémité fermée (26) avec l'axe principal de la fente parallèle à l'axe du cylindre (20) de confinement de vortex.

2. Un séparateur à cyclone selon la revendication 1, dans lequel la fente (23) présente une longueur égale à au moins 50 % de la longueur du cylindre (20) de confinement de vortex.

3. Un séparateur à cyclone selon la revendication 2, dans lequel la fente (23) présente une longueur égale à la longueur du cylindre (20) de confinement de vortex.

4. Un séparateur à cyclone selon l'une quelconque des revendications 1 à 3, dans lequel la fente (23) présente des bords chanfreinés pour l'évacuation tangentielle des solides et du gaz en provenance du cylindre (20) de confinement de vortex.

5. Un séparateur à cyclone selon l'une quelconque des revendications 1 à 4, dans lequel l'entrée de gaz (14) est située tangentiellement par rapport au corps de cyclone (13).

6. Un séparateur à cyclone selon l'une quelconque des revendications 1 à 5, dans lequel l'entrée de gaz (14) est située axialement par rapport au corps de cyclone (13).

7. Un séparateur à cyclone selon l'une quelconque des revendications 1 à 6, dans lequel le corps de cyclone (13) comporte une partie tronconique qui relie la partie supérieure du corps de cyclone (13) à une sortie (17) de vortex de diamètre réduit par rapport au diamètre du cyclone à l'extrémité d'entrée.
